# EUROPEAN PATENT APPLICATION

(11) **EP 1 580 151 A1**
(43) Date of publication of application: **28.09.2005**
(21) Application number: 04251745.8
(22) Date of filing: 25.03.2004
(51) Int. Cl.: B65G 53/46

(54) **Valve**

(71) Applicant: Innovene Europe Limited, Sunbury-on-Thames, Middlesex TW16 7BP (GB)
(72) Inventor: The designation of the inventor has not yet been filed
(74) Representative: Hawkins, David George

(57) **Abstract**

A valve suitable for the transfer of granulated material is of the ball valve type having a center core (4) and comprises a wiping means (6) for the efficient removal of material from the slots (5).

The valve is suitable for the continuous injection of catalyst into a polymerisation reactor.

## Description

The present invention relates to a valve and in particular to a valve suitable for use for the continuous injection of catalyst powders into a polymerisation reactor. The valve of the invention is particularly suitable for use in a polymerisation process for the copolymerisation of ethylene and higher α-olefins performed in the gas phase.

The present invention is also directed to a valve suitable for the continuous injection of predetermined quantities of catalyst powder into the reactor.

In recent years there have been many advances in the production of polyolefin homopolymers and copolymers due to the introduction of metallocene catalysts. Metallocene catalysts offer the advantage of generally a higher activity than traditional Ziegler catalysts and are usually described as catalysts which are single site in nature. There have been developed several different families of metallocene complexes. In earlier years catalysts based on bis (cyclopentadienyl) metal complexes were developed, examples of which may be found in EP 129368 or EP 206794. More recently complexes having a single or mono cyclopentadienyl ring have been developed. Such complexes have been referred to as 'constrained geometry' complexes and examples of these complexes may be found in EP 416815 or EP 420436. In both of these complexes the metal atom eg. zirconium is in the highest oxidation state.

Other complexes however have been developed in which the metal atom may be in a reduced oxidation state. Examples of both the bis (cyclopentadienyl) and mono (cyclopentadienyl) complexes have been described in WO 96/04290 and WO 95/00526 respectively.

The above metallocene complexes are utilised for polymerisation in the presence of a cocatalyst or activator. Typically activators are aluminoxanes, in particular methyl aluminoxane or compounds based on boron compounds. Examples of the latter are borates such as trialkyl-substituted ammonium tetraphenyl- or tetrafluorophenylborates. Catalyst systems incorporating such borate activators are described in EP 561479, EP 418044 and EP 551277.

The above metallocene complexes may be used for the polymerisation of olefins in solution, slurry or gas phase. When used in the slurry or gas phase the metallocene complex and/or the activator may be suitably supported. Typical supports include inorganic oxides eg. silica or polymeric supports may alternatively be used.

Examples of the preparation of supported metallocene catalysts for the polymerisation of olefins may be found in WO 94/26793, WO 95/07939, WO 96/00245, WO 96/04318, WO 97/02297 and EP 642536.

Supported catalysts for the polymerisation of olefins may be added to the polymerisation reactor by a number of suitable means.

Typically for example the catalyst may be added to the reactor in a slurry of a suitable solvent or may be transferred to the reactor by means of an inert carrier gas.

EP 628343 describes the introduction of a solid into a reactor by means of suspending the solid in a gas to form a suspension of the solid in the gas which is then conveyed to the reactor.

WO 00/07714 describes a process for introducing a solid catalyst into a fluidised bed by means of gravity and a conveying gas.

A difficulty encountered in low pressure polymerisation processes resides in obtaining reliable and consistent introduction of determinable quantities of catalyst powder into the polymerisation reactor. The powder is generally introduced into the reactor in a sequential manner. If the quantity introduced varies from one batch to another the quality of the resultant polymer may be inconsistent leading to the formation of "hot spots" in the reactor which may result in the agglomeration of the molten polymer leading to the stoppage of the reaction.

The nature of the catalyst powder may also contribute to the potential for "hot spots" in the reactor. For example the powder may be difficult to handle if comprising very fine particles. This may for example be the case when the catalysts are of the Ziegler Natta type or for those catalysts based on chromium oxide compounds.

Our earlier patent application EP 214844 describes a rotary-type metering device suitable for readily dispensing a predetermined quantity of a granular material into a reactor. The device comprises a casing having a rotatable core comprising a cavity for receiving the material, the casing having an inlet for providing material to the cavity and an outlet for the transfer of the material into the reactor. This type of device is used for the direct injection of catalyst doses into the reactor rather than for the continuous injection.

WO 00/51923 describes a ball valve for controlling throughput of granulated materials. The ball valve comprises a series of peripheral slits enabling a substantially continuous throughput of the material.

When used with catalyst powders having a reduced or poor flowability such ball valves may become inefficient within a few hours of operation. The slits of the ball valve delivering the catalyst powder to the reactor become full of sticky catalyst and cannot provide the required dosage of catalyst. This problem may be particularly applicable to catalyst powders having a tendency to have increased electrostatic charge.

We have now surprisingly found that by the incorporation of a wiper device into a ball valve of the type described in the aforementioned WO 00/51923 these problems may be substantially reduced allowing for an improved continuous injection of catalyst powder into the reactor.

Thus according to the present invention there is provided a ball or rotary type valve for controlling the flow of granulated materials, said valve comprising a casing (1) having entry and exit means (2) and (3) in connection with piping upstream (8) and downstream (9) respectively and a spherical core (4), said core having a series of peripheral slots (5) arranged therein enabling the continuous transfer of said granulated material from the entry means (2) to the exit means (3) *characterised in that* said valve is provided with wiping means (6) arranged in such a position to ensure substantially all of the granulated material is removed from each slot (5) before discharge of the material to the exit means (3).

The wiping means is preferably situated in close proximitry to the exit means (3). The wiping means is arranged such that it is in contact with each slot (5) as they become closely aligned with the exit means (3).

The wiping means is most preferably located on a flange at the bottom of the valve.

The wiping means preferably comprises a static device having a flexible member arranged such that said member is able to contact the granulated material in each slot. In this way any material adhering to the slot is removed due to the friction of the wiping means on the internal wall of the slot. The granulated material is then easily removed from the valve to the exit means.

The flexible member is preferably shaped as to enable maximum contact with the material contained within each slot.

The flexible member preferably has a flared configuration towards the end in location with the slot.

The spherical core may be driven by a suitable variable speed motor such that the transfer rate of the granulated material through the valve may be controlled.

The number of slots is such that a substantially continuous throughput of material may be achieved for all operating speeds.

The valve is shaped in order to prevent any direct communication between the entry and exit means other than by means of the slots arranged on the spherical core.

The valve of the present invention is typically suitable for the injection of catalyst powder into a polymerisation reactor. In particular the invention is particularly suitable for the injection of powders of poor flowability.

The valve of the present invention is suitable for the metering granular materials having bulk densities typically in the range 0.20 top 0.60 g/cm².

The valve is particularly suitable for feeding large capacity industrial reactors with granulated materials, in particular for the reliable introduction of predetermined quantities of materials.

The valve is directed primarily to the continuous injection of catalyst into a polymerisation reactor.

The valve of the present invention is most suitable for use in slurry or gas phase processes.

A slurry process typically uses an inert hydrocarbon diluent and temperatures from about 0°C up to a temperature just below the temperature at which the resulting polymer becomes substantially soluble in the inert polymerisation medium. Suitable diluents include toluene or alkanes such as hexane, propane or isobutane. Preferred temperatures are from about 30°C up to about 200°C but preferably from about 60°C to 100°C. Loop reactors are widely used in slurry polymerisation processes.

Gas phase processes for the polymerisation of olefins, especially for the homopolymerisation and the copolymerisation of ethylene and α-olefins for example 1-butene, 1-hexene, 4-methyl-1-pentene are well known in the art.

Typical operating conditions for the gas phase are from 20°C to 100°C and most preferably from 40°C to 85°C with pressures from subatmospheric to 100 bar.

Particularly preferred gas phase processes are those operating in a fluidised bed. Examples of such processes are described in EP 89691 and EP 699213.

Particularly preferred polymerisation processes are those comprising the polymerisation of ethylene or the copolymerisation of ethylene and α-olefins having from 3 to 10 carbon atoms.

The invention is particularly suitable for the injection of catalyst powders comprising metallocene catalyst systems in particular silica supported metallocene catalyst systems.

The present invention will be further illustrated with reference to the accompanying Figures.

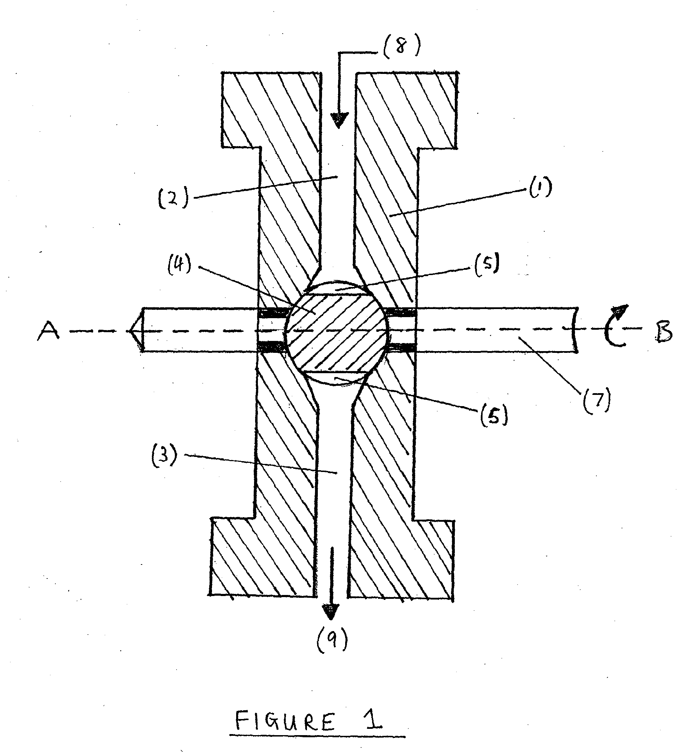

Figure 1 illustrates the general ball or rotary valve construction comprising a casing (1) having entry means (2) through which the granulated material enters the valve from piping (8) upstream of the valve. Exit means (3) provides the discharge of the material from the valve to the reactor via piping (9) downstream of the valve. The valve has a core (4) having peripheral slots (5) arranged therein. The core rotates along the axis A-B by means of the rotating member (7) which is suitably connected to a variable speed motor.

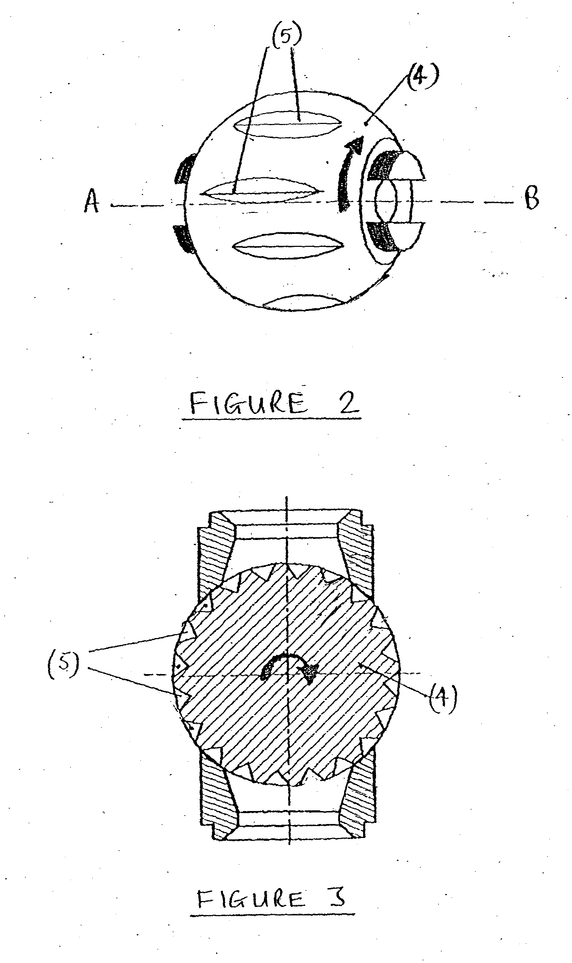

Figure 2 specifically illustrates the core (4) of the valve showing four slots (5) and Figure 3 illustrates a view of the central section of the valve throught the axis A-B showing a core (4) having a larger number of slots (5).

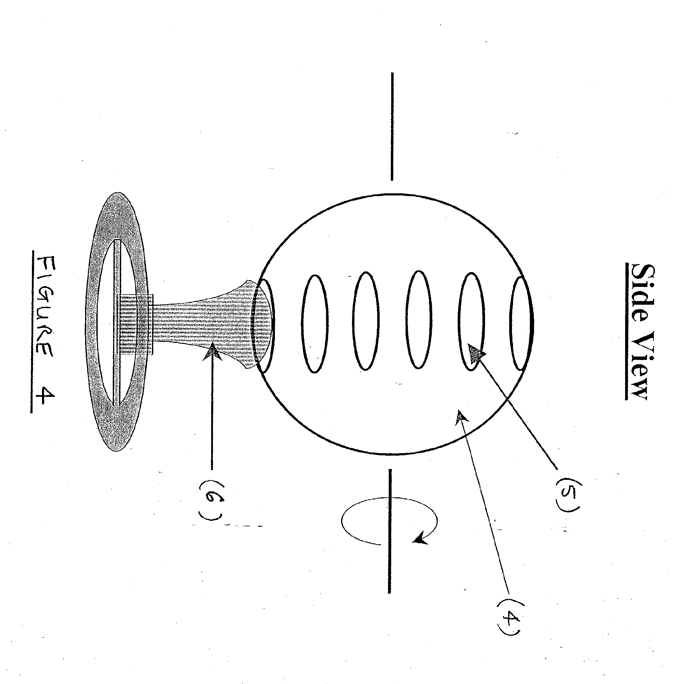

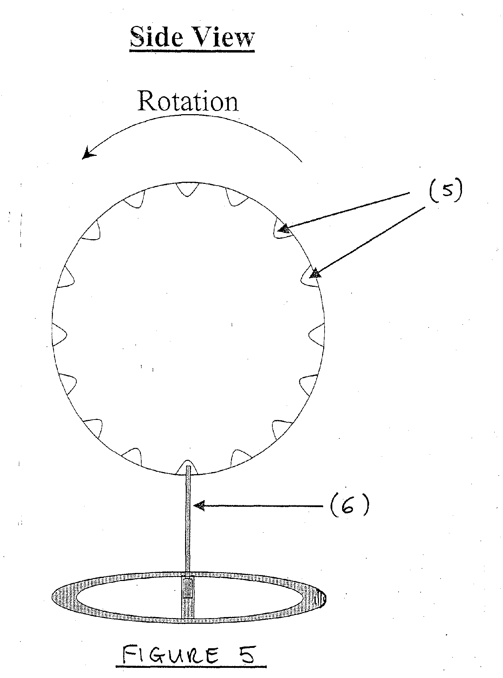

Figures 4, and 5 illustrate side views of the valve showing the location of the wiping means (6) with respect to the core (4) and the slots (5).

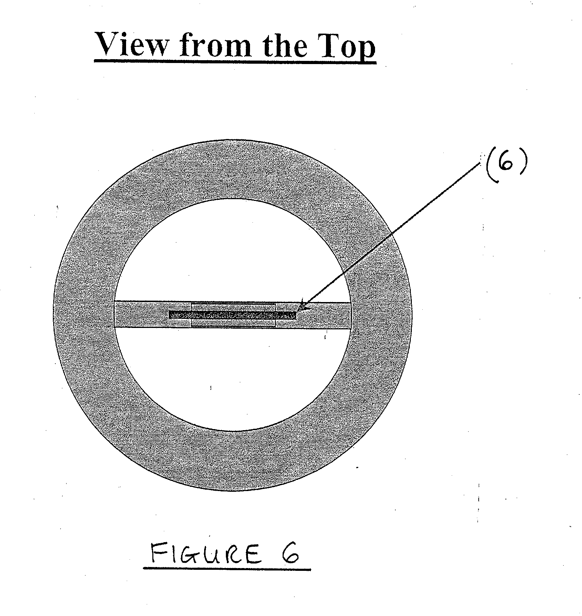

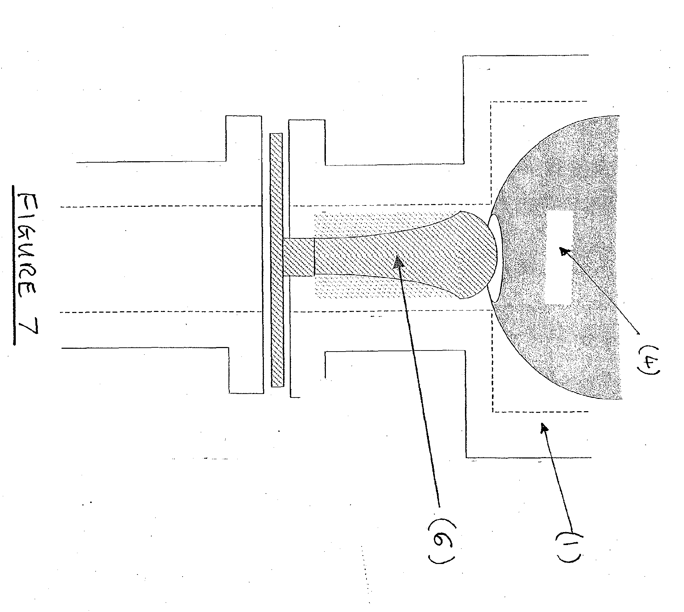

Figure 6 illustrates a view form above the valve and Figure 7 a view of the lower area of the valve showing the wiper means (6) in contact with the lower slot (5).

## Claims

1. A ball or rotary type valve for controlling the flow of granulated materials, said valve comprising a casing (1) having entry and exit means (2) and (3) in connection with piping upstream (8) and downstream (9) respectively and a spherical core (4), said core having a series of peripheral slots (5) arranged therein enabling the continuous transfer of said granulated material from the entry means (2) to the exit means (3) ***characterised in that*** said valve is provided with wiping means (6) arranged in such a position to ensure substantially all of the granulated material is removed from each slot (5) before discharge of the material to the exit means (3).
